# EUROPEAN PATENT APPLICATION

(11) **EP 2 778 608 A2**
(43) Date of publication of application: **17.09.2014**
(21) Application number: 14157766.8
(22) Date of filing: 05.03.2014
(51) Int. Cl.: G01C 19/5691

(54) **XY-axis gyroscopes with electrode configuration for detecting quadrature errors and out-of-plane sense modes**

(30) Priority: 15.03.2013 US 201313835416
(71) Applicant: Analog Devices, Inc., Norwood, MA 02062-9106 (US)
(72) Inventor: Johari-Galle, Houri, Sunnyvale, CA California 94085 (US); Clark, William A., Winchester, MA Massachusetts 01890 (US)
(74) Representative: Wardle, Callum Tarn

(57) **Abstract**

Various embodiments include feedback circuits for tuning the drive modes of a shell-type gyroscope, while other embodiments include separate circuits for tuning the sense mode of a shell-type gyroscope to reduce or avoid quadrature errors. Still other embodiments include circuits to excite the sense modes (i.e., the out-of-plane modes) of a gyroscope without requiring the application of a rotation to the gyroscope, to ensure that the sense modes are aligned with the sense electrodes.

## Description

### Technical Field

The present invention relates to shell-type gyroscopes, and more particularly to improving the accuracy of shell-type gyroscopes.

### Background Art

It is known in the prior art to drive a shell-type gyroscope along a drive axis using electrostatic forces. The forces cause the proof mass to resonate. If the gyroscope is subject to rotation about an axis normal to the drive axis, Coriolis forces will distort the surface of the proof mass. Coriolis-induced distortions can be measured and processed to assess the rotation.

### Summary of the Embodiments

A first embodiment provides a shell-type gyroscope that has a resonator disposed in a resonator plane, the resonator plane defining an X-axis, and defining a Y-axis orthogonal to the X-axis in the resonator plane; a plurality of X-drive electrodes disposed on the X-axis and in the resonator plane; a plurality of Y-drive electrodes disposed on the Y-axis and in the resonator plane, the plurality of X-drive electrodes and Y-drive electrodes configured to differentially drive the resonator in the resonator plane. The gyroscope also has a plurality of sense-drive electrodes including a plurality of X sense-drive electrodes disposed in the resonator plane and adjacent to a first one of the plurality of X-drive electrodes, and a plurality of Y sense-drive electrodes disposed in the resonator plane and adjacent to a first one of the plurality of Y-drive electrodes, where the plurality of sense-drive electrodes configured to differentially detect in-plane motion of the resonator. In addition, the gyroscope has a plurality of sense-Coriolis electrodes including a first plurality of differential sense-Coriolis electrodes disposed parallel to the resonator plane and along the X-axis and disposed so as to receive common feedthrough signals from a corresponding one of the X-drive electrodes; and a second plurality of differential sense-Coriolis electrodes disposed parallel to the resonator plane and along the Y-axis, and disposed so as to receive common feedthrough from a corresponding one the Y-drive electrodes.

In some embodiments, the plurality of X-sense drive electrodes are configured to detect displacement of the resonator within the resonator plane; and the plurality of Y-sense drive electrodes are configured to detect displacement of the resonator within the resonator plane.

The plurality of X-sense drive electrodes may include a first X-sense drive electrode disposed adjacent to a first one of the X-drive electrodes; and a second X-sense drive electrode disposed adjacent to the first one of the X-drive electrodes, such that the first one of the X-drive electrodes is between the first X-sense drive electrode and the second X-sense drive electrode. Some such gyroscopes also include a plurality of drive-tuning electrodes disposed in the resonator plane, the plurality of drive-tuning electrodes configured to controllably exert electrostatic force on the resonator so as to align the drive axis with the anti-nodes of the resonator. The plurality of drive-tuning electrodes may include a first X-axis drive-tuning electrode disposed adjacent to a second one of the X-drive electrodes; and a second X-axis drive-tuning electrode disposed adjacent to the second one of the X-drive electrodes, such that the first one of the X-drive electrodes is between the first X-axis drive-tuning electrode and the second X-axis drive-tuning electrode.

In some embodiments, the X-drive electrodes and the Y-drive electrodes are configured to be fully differential and symmetric about both X-axis and the Y-axis simultaneously.

In some embodiments, the gyroscope also has a plurality of sense-tuning electrodes disposed parallel to the resonator plane, the plurality of sense-tuning electrodes configured to controllably exert electrostatic force on the resonator so as to align the resonator with the sense-Coriolis electrodes. The plurality of sense-tuning electrodes may include a pair of X-axis sense-tuning electrodes, and a pair of Y-axis sense-tuning electrodes. The gyroscope may also have sense-tuning feedback inputs electrically coupled to the plurality of sense-Coriolis electrodes; and sense-tuning feedback outputs electrically coupled to the sense-tuning electrodes, the feedback circuit configured to exert an electrostatic force on the resonator.

Some gyroscopes also include a substrate having a substrate plane, and the resonator is suspended above or below the substrate such that the resonator plane is parallel to the substrate plane, and the plurality of sense-Coriolis electrodes are disposed on the substrate.

In yet other embodiments, the plurality of X-sense-Coriolis electrodes includes a first X-sense-Coriolis electrode, and a second X-sense-Coriolis electrode; and the plurality of Y-sense-Coriolis electrodes includes a first Y-sense-Coriolis electrode and a second Y-sense-Coriolis electrode, and the gyroscope further includes a first differential amplifier having a first differential input and a second differential input and a first output, the first differential input electrically coupled to the first X-sense-Coriolis electrode and the second differential input electrically coupled to the second X-sense-Coriolis electrode, such that the first differential amplifier rejects the common feedthrough signal; as well as a second differential amplifier having a third differential input and a fourth differential input and a second, the third differential input electrically coupled to the first Y-sense-Coriolis electrode and the fourth differential input electrically coupled to the second Y-sense-Coriolis electrode, such that the second differential amplifier rejects the common feedthrough signal.

Yet another embodiment provides a method of detecting quadrature errors in an XY-gyroscope, including the steps of providing a shell-type gyroscope, where the gyroscope includes a resonator having a resonator surface disposed in a resonator plane, the resonator plane defining an X-axis, and defining a Y-axis orthogonal to the X-axis in the resonator plane, and defining a Z-axis orthogonal to the resonator plane; a plurality of X-drive electrodes disposed on the X-axis and in the resonator plane; and a plurality of Y-drive electrodes disposed on the Y-axis and in the resonator plane, the plurality of X-drive electrodes and Y-drive electrodes configured to differentially drive the resonator in the resonator plane, and also includes a plurality of sense-drive electrodes having a plurality of X sense-drive electrodes disposed in the resonator plane and adjacent to a first one of the plurality of X-drive electrodes, and a plurality of Y sense-drive electrodes disposed in the resonator plane and adjacent to a first one of the plurality of Y-drive electrodes, in which the plurality of sense-drive electrodes configured to detect in-plane displacement of the resonator. Such a gyroscope also includes a plurality of sense-Coriolis electrodes having a first plurality of differential sense-Coriolis electrodes disposed parallel to the resonator plane and along the X-axis and disposed so as to receive an X-common feedthrough from a corresponding one of the X-drive electrodes, and configured to sense rotations about the Y-axis; and a second plurality of differential sense-Coriolis electrodes disposed parallel to the resonator plane and along the Y-axis, and disposed so as to receive a common feedthrough from a corresponding one the Y-drive electrodes, and configured to sense rotations about the X-axis. The method further includes steps of driving the resonator in an in-plane mode with drive signals from the X-drive electrodes and the Y-drive electrodes, the in-plane mode having distortion along the Z-axis due to a Poisson effect, causing the surface of the resonator to displace in the Z-axis; sensing a first Z-axis displacement of the resonator due to the Poisson effect of the in-plane drive modes using the sense-Coriolis electrodes on a substrate disposed adjacent to the resonator in parallel with X-axis; and sensing a second Z-axis displacement of the resonator due to the Poisson effect of the in-plane drive modes using the sense-Coriolis electrodes on the substrate in parallel with the Y-axis; along with assessing the amplitudes and phase relationship of the first Z-axis displacement and the second Z-axis displacement to determine quadrature errors on the XY-axis gyroscope.

In some embodiments, the method of detecting quadrature errors in an XY-gyroscope according also includes applying tuning voltages to the X-axis drive-tuning electrodes and the Y-axis drive-tuning electrodes to drive an amplitude difference and a phase difference between the first Z-axis displacement and the second Z-axis displacement to zero.

In another embodiment, a method of exciting sense Coriolis out-of-plane modes in an XY-axis gyroscope, without the application of any rotation rate into the gyroscope, includes providing a gyroscope as described above, along with the steps of providing a resonator DC voltage to the resonator; driving the resonator in an in-plane mode with drive signals from the X-drive electrodes and the Y-drive electrodes, the in-plane mode having a slight Poisson distortion causing the surface of the resonator to displace in the Z-axis, such that the Poisson distortion in the Z-axis can be used as harmonic excitation and can be sensed by the sense-Coriolis electrodes; and applying DC voltages to the sense-Coriolis electrodes, the DC voltages being different than the resonator DC voltage and differential on the differential sense-Coriolis electrodes, such that the out-of-plane modes can be excited without application of any rotation.

The step of driving the resonator in an in-plane mode with drive signals from the X-drive electrodes and the Y-drive electrodes may include driving the X-drive electrodes with a first periodic drive signal having a period; and driving the Y-drive electrodes with a second periodic drive signal having a period and have a phase of 180 degrees relative to the first periodic signal.

The method may also include the step of assessing the frequency of the excited out-of-plane mode relative to the frequency of the drive mode; and assessing the alignment of the excited out-of-plane mode relative to the sense-Coriolis electrodes.

In a further embodiment, a shell-type gyroscope includes a resonator disposed in a resonator plane, the resonator plane defining an X-axis, and defining a Y-axis orthogonal to the X-axis in the resonator plane, and defining a Z-axis mutually orthogonal to the X-axis and the Y-axis; means for differentially driving the resonator in the X-axis; means for differentially driving the resonator in the Y-axis; and means for sensing rotations about two orthogonal axes-of-rotation in the resonator plane using two out-of-plane flexural or bulk modes of the resonator caused by rotation about the axes

Such a gyroscope may also have means for controllably exerting electrostatic force on the resonator so as to align the drive axis with anti-nodes of the resonator. Some embodiments include means for controllably exerting electrostatic force on the resonator so as to align the resonator with the means for sensing rotations about two orthogonal axes-of-rotation. Various embodiments include means for detecting quadrature errors. Finally, some embodiments include a means for exciting out-of-plane modes which are sense-Coriolis modes in the gyroscope, without the application of any rotation rate into the gyroscope.

### Brief Description of the Drawings

The foregoing features of embodiments will be more readily understood by reference to the following detailed description, taken with reference to the accompanying drawings, in which:
Fig. 1 schematically illustrates are cross-section of an illustrative embodiment of a gyroscope;
Fig. 2 schematically illustrates an array of electrodes surrounding a resonator in an illustrative embodiment of a gyroscope;
Fig. 3A schematically illustrates elliptical distortions of a resonator of an illustrative embodiment of a gyroscope;
Fig. 3B schematically illustrates embodiments of X-axis and Y-axis drive signals;
Fig. 4 schematically illustrates Coriolis acceleration in an illustrative embodiment of a gyroscope;
Fig. 5 schematically illustrates two concentric arrays of electrodes in an illustrative embodiment of a gyroscope;
Figs. 6A-6D schematically illustrate elliptical distortions of a resonator of an illustrative embodiment of a gyroscope;
Figs. 7 schematically illustrates circuits for assessing rotation rate by processing signals from Coriolis-sense electrodes;
Figs. 8 schematically illustrates a circuit for aligning a resonator;
Figs. 9A-8D schematically illustrate sense mode distortions in an illustrative embodiment of a gyroscope;
Figs. 10A-B schematically illustrates circuits for providing sense-mode feedback in an illustrative embodiment of a gyroscope;
Fig. 11 schematically illustrates a circuit for exciting a resonator of an illustrative embodiment of a gyroscope.

### Detailed Description of Specific Embodiments

Various embodiments provide gyroscopes with significantly increased accuracy. For example, some embodiments include electrodes arrange in a way that facilitates improving the drive of the gyroscope's resonator. Still other embodiments include circuits for tuning the sense mode of a shell-type gyroscope to reduce or avoid quadrature errors. Still other embodiments include circuits to excite the sense modes (i.e., the out-of-plane modes) of a gyroscope without requiring the application of a rotation to the gyroscope, to ensure that the sense modes are aligned with the sense electrodes.

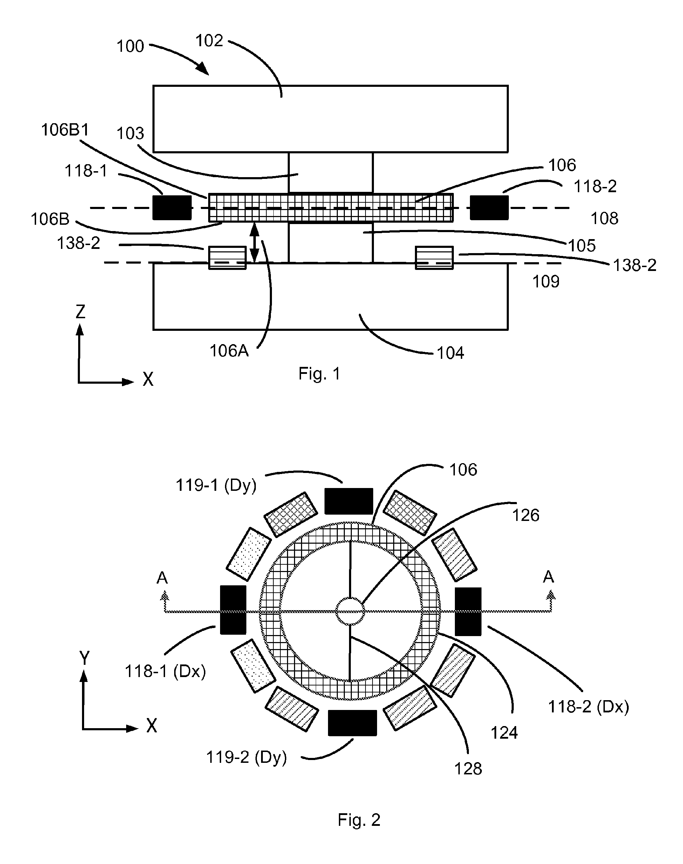

Fig. 1 is a schematic diagram of a shell-type gyroscope 100 in accordance with an exemplary embodiment. The term "shell-type gyroscope" is a non-specific term referring to a gyroscope that is shaped like a shell, for example, having a resonant mass shaped as a disk, ring, donut, cylinder, hemi-sphere, etc.

In operation, the resonant mass 106 (or "resonator" or "body" or "proof mass") of a typical shell-type gyroscope is driven into oscillation, for example at its resonant frequency, and the shape of the resonator 106 changes as the resonator 106 oscillates. While the location of the center of mass of the resonator 106 may remain substantially unchanged (e.g., with respect to the substrate 104), the shape of the resonator 106 may change in significant ways. For example, when oscillating, the surface 106B of the resonator 106 may be displaced (e.g., along the Z-axis) from its nominal position. A line of such points may be referred to as an anti-node line. In some modes, however, there may be lines of points on the surface of the mass that are not displaced by the oscillation. Such a line may be referred to a "node line." Generally the "mode" of a resonating body is the shape of motion of the body at resonance. Modes that have identical resonant frequencies are referred to as being "degenerate" or "degenerative" modes because oscillations in these modes cannot be distinguished from each other according to frequency. On the other hand, modes that have non-identical resonant frequencies are referred to as being "non-degenerate" or "non-degenerative."

In the gyroscope of Fig. 1, a resonator 106 is anchored by top anchor 103 to top substrate 102 and by bottom anchor 105 to bottom substrate 104. When not subject to drive forces or rotation, the resonator 106 has a nominal shape, and the surface 106B of the resonator 106 has a nominal distance or gap 106A from the substrate 104. In some embodiments, the gap 106A may in a range from approximately 10 nanometers ("nm") to several hundred nm when the resonator 106 is at rest.

### Nominal Operation

The operation of a shell-type gyroscope is described in connection with Figs. 1-5. Various electrodes described below drive the resonator 106 in a single mode. The resonator 106 may be held at a fixed DC voltage. As such, an electrostatic force may be applied to the resonator by an electrode (e.g., drive electrode 118-1) across a gap from the resonator 106, by providing the electrode with a voltage that is different from the resonator's voltage.

Also, if the resonator is separate from another electrode (e.g., Coriolis-sense electrode 138-2, or sense-drive electrode 115-2, for example) across a capacitive gap, then a change in that gap will induce current to flow according to the equation i= Vdc/dt, where "V" is the voltage across the capacitive gap and "dc/dt" is the time rate of change of the capacitance between the electrodes.

The single drive mode includes applying electrostatic forces along both an X and Y axis. The drive mode may be described as having two repeating, periodic phases, in which the resonator is distorted into an elliptical shape along the X-axis, then along the Y-axis, and may be referred to as a "differential drive." Although the operation of the gyroscope may sometimes be described with respect to one axis or the other, it should be understood that there is only a single drive mode. To that end, drive electrodes 118-1 and 118-2 aligned with the X-axis produce electrostatic drive forces along the X-axis (hence, those drive electrodes are indicated as Dx), to drive the resonator 106 in an in-plane resonance mode (i.e., within resonator plane 108), while sense electrodes 139-1 (also known as "SCxp") and 139-2 (also known as "SCxn") underlying the resonator 106 sense the out-of-plane degenerate or non-degenerate mode excited by Coriolis forces (i.e., rotation rates around an in-plane axis). Similarly, drive electrodes 119-1 and 119-2 aligned along the Y-axis produce drive forces along the Y-axis (hence, those drive electrodes are indicated as Dy) while sense electrodes 138-1 (also known as "SCyp") and 138-2 (also known as "SCyn") underlying the resonator 106 sense the out-of-plane degenerate or non-degenerate mode excited by Coriolis forces. It should be noted that sense electrodes additionally or alternatively may be placed above the resonator 106. Similarly, while the resonator 106 is shown as being supported or anchored from the top and bottom, the resonator 106 alternatively may be supported from the top or bottom only.

Fig. 2 shows the configuration of the resonator 106 and drive electrodes 118-1 and 118-2 in one exemplary embodiment. Indeed, the embodiment of Fig. 1 may be a cross-section of the embodiment of Fig. 2 along the line A-A, and the embodiment of Fig. 2 may be a cross-section of the embodiment of Fig. 1 in the resonator plane 108. Here, the resonator 106 is shown as being configured in a "hub-and-spoke" configuration with an outer ring 124 coupled to an inner hub 126 via a number of spokes 128, although the resonator 106 may be other shapes/configurations in other embodiments (e.g., a solid or perforated disk or plate, donut, ring, etc.). The hub 126 is attached via anchors 103 and 105 to the substrates 102 and 104, respectively.

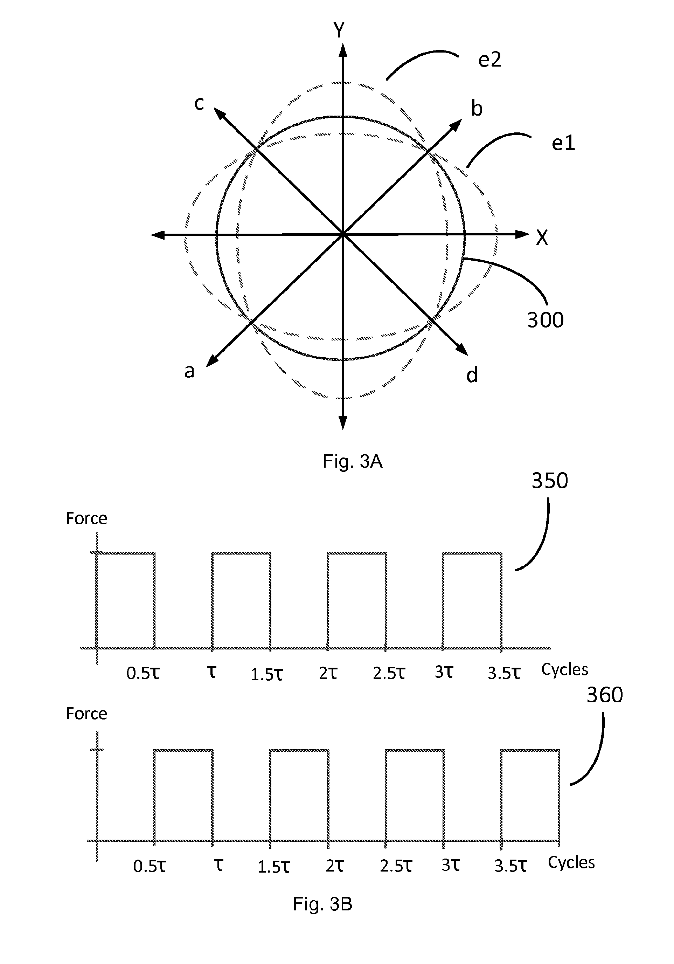

In the embodiment of Fig. 2, drive electrodes (e.g., electrodes 118-1, 118-2) simultaneously drive the outer ring 124 in a flexural or bulk mode along two orthogonal axes (X and Y) in the plane 108 of the resonator 106, as depicted in Fig. 3A. Here, a solid line 300 indicates the geometry of the ring 124 in its inactive state (i.e., circular), a dashed ellipse designated "e1" corresponds to an extremal extension of the ring along the X-axis while contracting along the Y-axis (for example, in the first half of the drive cycle), and a dashed ellipse designated "e2" illustrates an extremal extension of the ring along the Y-axis while contracting along the X-axis (i.e., in a second half of the drive cycle). Lines e1 and e2 represent the drive mode (in-plane flexural or bulk mode shapes) in the first and second halves of a drive cycle oscillation. In the extensions of the resonator 106 are in-plane distortions; in other words, the motion of the resonator 106 remains substantially in, or parallel to, the resonator plane 108. Ideally, none of the motion of the resonator 106 is in the Z-axis in response to the electrostatic drive forces, although some slight Z-axis motion may be produced.

Fig. 3B schematically illustrates electrostatic drive forces for driving gyroscope 100 and nominally producing the distortions schematically illustrated in Fig. 3A. The electrostatic force 350 is a periodic square wave having a nominal period (T; half of a period is 0.5 T, etc.) and nominal amplitude (Force), and may be applied via drive electrodes 118-1 and 118-2 for example. In some embodiments, the electrostatic forces of the drive signal 350 may be created by applying a drive voltage having an amplitude of five volts to drive electrodes as described herein. The drive (i.e., electrostatic force) signal 360 is a periodic square wave nominally having the same period and amplitude as signal 350, but signal 360 is 180 degrees out of phase with respect to the drive signal 350. When the drive signal 350 is applied to electrodes 118-1 and 118-2, the drive signal 360 may be applied to drive electrodes 119-1 and 119-2 for example, thus causing the resonator mode to periodically change shape from e1 to e2 and back, with a period equal to the period of the drive signals 350 and 360. The frequency at which electrostatic forces are applied may drive the resonator 106 to oscillate at its resonating frequency.

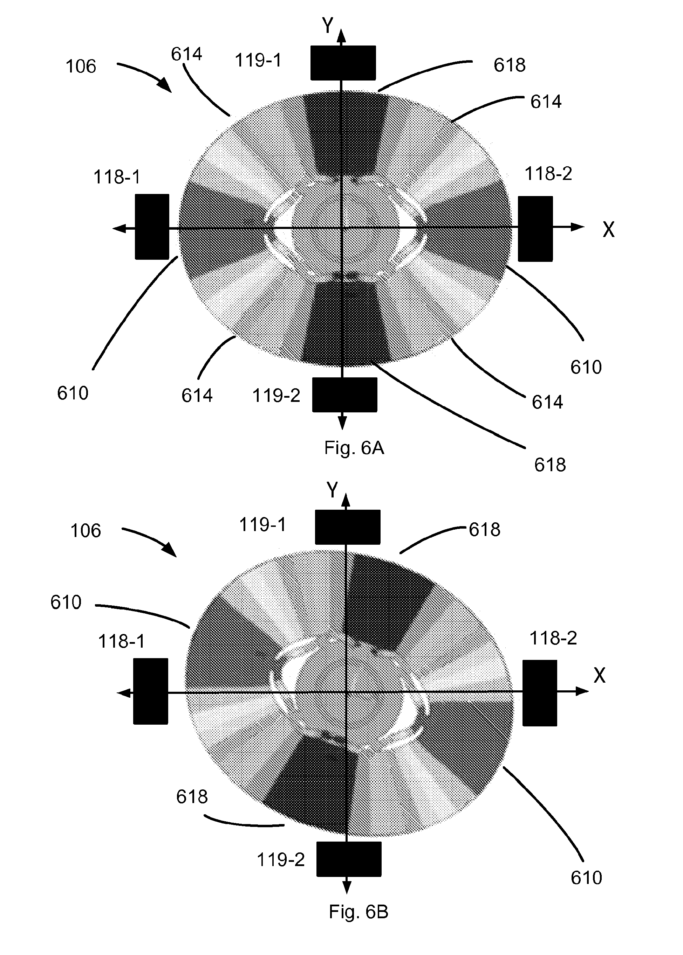

In this resonance mode, the resonator essentially has anti-nodes along the X and Y axes simultaneously (e.g., see Fig. 6A), i.e., the resonator alternates between one shape (e.g., e1) in which the anti-node along the X-axis is at its maximum when the anti-node along the Y-axis is at its minimum in the first half of a cycle, and a second shape (e.g., e2) in which the anti-node along the Y-axis is at its maximum when the anti-node along the X-axis is at its minimum in the second half of the cycle. It should be noted that the points at which lines ab and cd (which are offset 45 degrees relative to the X and Y axes) intersect the circle 300 and the two ellipses (e1, e2) represent nodes at which there is substantially no driven displacement of the resonator. As used herein and any appended claims, a "node" is a point or region on the surface 106B of a resonator 106 that experiences no displacement or motion in response to a force. The term "anti-node" or "anti-node line" is a point or region on the surface 106B of a resonator 106 that experiences maximal displacement (e.g., relative to other points on the surface 106B) in response to a force. For example, a resonator may have one or more anti-nodes (or anti-node lines) in response to a drive signal, and one or more different anti-nodes (or anti-node lines) in response to a Coriolis force.

The gyroscope 100 detects rotations about two axes in the drive plane 108 by sensing distortions in the resonator 106 due to Coriolis forces.

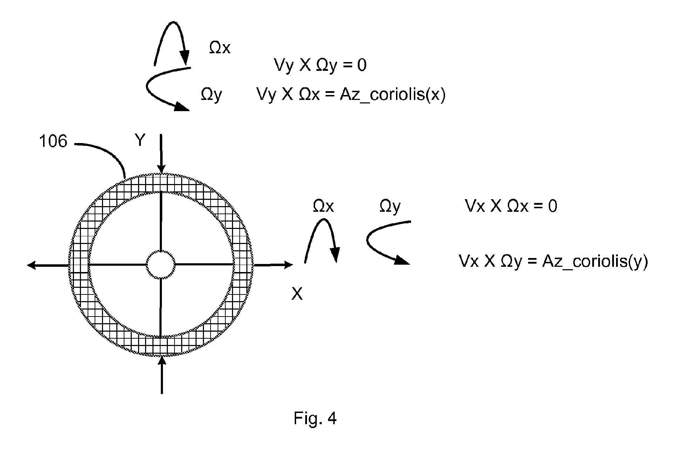

Fig. 4 is a schematic diagram showing representations of the in-plane elliptical drive mode and the Coriolis forces along each axis two out-of-plane sense modes (which may be degenerate or non-degenerate, bulk or flexural) for the embodiment of Figs. 1, 2, and 3. Here, Vx is the velocity of the resonator 106 in-plane along the X-axis, Vy is the velocity of the resonator in-plane along the Y-axis, Ωx is the rotation rate about the x-axis, and Ωy is the rotation rate about the Y-axis. In this embodiment, for two perpendicular axes (i.e., the X-axis and the Y-axis) in the resonator plane 108, the Coriolis acceleration along the z-direction (e.g., a direction mutually orthogonal to the X-axis and Y-axis) at each axis is essentially the cross-product of the velocity along that axis and the rotation rate about the other axis in the plane of the resonator 106.

One out-of-plane sense mode has anti-node lines in the z-direction along the x-axis and detects only the Ωy, i.e., rotation about the y-axis results in Coriolis acceleration in the z-direction along the X-axis (i.e., Vx x Ωy = AzCoriolis(y)), which can be sensed using out-of-plane sense electrodes aligned with the x-axis, but rotation about the X-axis produces no Coriolis acceleration in the z-direction along the x-axis (i.e., Vx x Ωx = 0).

A second out-of-plane sense mode has anti-node lines in the z-direction along the Y-axis and detects only the Ωx, i.e., rotation about the X-axis results in Coriolis acceleration in the z-direction along the y-axis (i.e., Vy x Ωx = AzCoriolis(x)), which can be sensed using out-of-plane sense electrodes aligned with the Y-axis, but rotation about the Y-axis produces no Coriolis acceleration in the z-direction along the Y-axis (i.e., Vy x Ωy = 0).

As illustrated above, the ideal operation of a shell-type gyroscope depends on the response of a resonator 106 to drive forces and Coriolis forces. In practice, various aspects of the operation of such a gyroscope may benefit from the arrangement of electrodes, and/or from being adjusted or tuned. To that end, various embodiments may have electrodes and feedback circuits to adjust or tune the gyroscope, as discussed in more detail below.

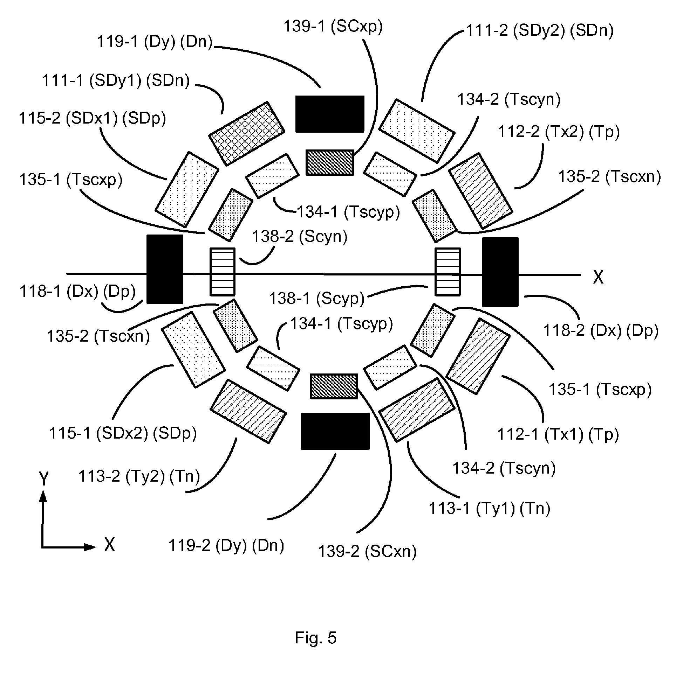

Various embodiments may include a variety of electrodes that may sense the operation of the gyroscope, and provide a variety of drive and feedback signals. Fig. 5 schematically illustrates two arrays of electrodes for an illustrative embodiment of a gyroscope, although various embodiments may have more or fewer electrodes. In Fig. 5, the outer ring of electrodes (e.g., 118-1, 135-1, etc.) are within (e.g., are intersected by) the resonator plane 108, while the inner-ring of electrodes (e.g., 138-2, 135-1, etc.) are on or in (e.g., are intersected by) the substrate plane 109, and indeed may be on or in the substrate 104. Individual electrodes in each of the circular arrays may be described as being adjacent to other electrodes. For example, electrode 118-1 on the outer circle of electrodes may be described as adjacent to electrodes 115-1, and also adjacent to electrode 115-2. Also, electrode 118-1 may be described as between electrodes 115-1 and 115-2 on a common circle. The operation of these electrodes is described in more detail below.

### Drive Mode

An alternate illustration of a resonator 106 resonating in the resonator plane 108 is schematically illustrated in Fig. 6A. In this embodiment, the resonator 106 nominally has a circular cross-section in the resonator plane 108, but is distorted into a non-circular (e.g., elliptical) shape by the application of an electrostatic force by each of the electrodes 118-1 and 118-2 (and similarly by electrodes 119-1 and 119-2). Indeed, the mode shape illustrated in Fig. 6A may be known as an elliptical mode. This is an in-plane mode, since the movement of the resonator 106 is in, or substantially parallel to, the resonator plane.

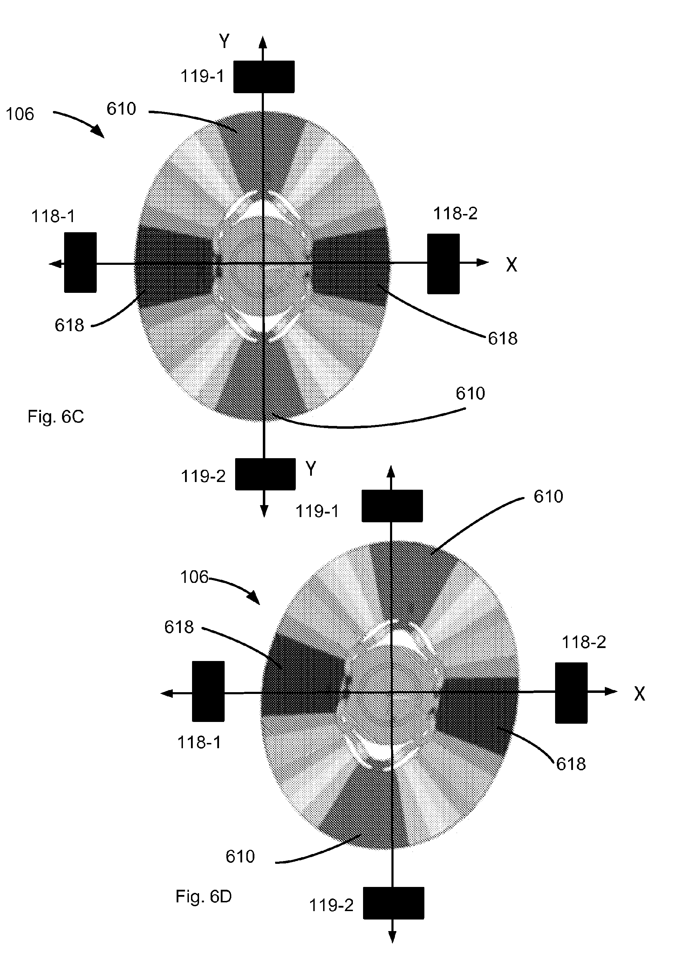

Ideally, the mode of the resonator 106 in response to being differentially driven aligns with the X-axis, as schematically illustrated in Fig. 6A, and with the Y-axis (Fig. 6C). Electrodes 119-1 and 119-2 similarly drive the resonator 106 along the Y-axis, as described in connection with Figs. 3A and 3B. In other words, the greatest motion of the surface 106B1 of the resonator 106 in response to X-axis drive signal occurs in, or parallel to, the resonator plane 108 along anti-node line 610, such a mode is said to be "aligned" with the X-axis. Note that another anti-node line, 618, is produced in, or parallel to, the resonator plane 108 along the Y-axis. Between the anti-node line 610 and the anti-node line 618 is a node-line 614.

However, in some circumstances the drive mode may not align with the X-axis and/or the Y-axis, in which case the drive mode is said to be "misaligned." For example, a drive mode that is not aligned with the X-axis is schematically illustrated in Fig. 6B (i.e., the anti-nodes 610 and 618 are not along the X-axis). Fig. 6C schematically illustrates a phase of the drive cycle in which the drive mode (e.g., e2) is aligned with the Y-axis, while a phase of the drive cycle in which the drive mode is not aligned with the Y-axis is schematically illustrated in Fig. 6D.

When the mode is misaligned, the ability of the gyroscope 100 to accurately sense and measure rotation about an axis in the resonator plane 108 may be compromised. For example, such a misalignment may increase cross-talk or feedthrough between various electrodes, and therefore between the various phases of the out-of-plane modes. Therefore, some embodiments include circuits and structures to adjust or tune the drive modes.

For example, some embodiments include drive-sense electrodes 115-1 (which may also be known as "SDx1" or "SDp") and 115-2 (which may also be known as "SDx2" or "SDp") to sense the displacement of the resonator 106 in response to drive signals. The drive-sense electrodes 115-1 and 115-2 are located in the resonator plane 108 adjacent to the resonator 106, but are not on the X-axis. In other words, when the resonant mode is aligned with the X-axis, the drive-sense electrodes 115-1 and 115-2 are off of the anti-node line 610. A similar set of drive sense electrodes 111-1 (which may also be known as "SDy1" or "SDn") and 111-2 (which may also be known as "SDy2" or "SDn") are disposed adjacent to (but not on) the Y-axis.

This configuration of electrodes provides a number of benefits, as described below

### Feedthrough.

For example, some prior art X-Y gyroscopes drive a resonator with only a single drive electrode adjacent to the resonator along an axis, and sense the Coriolis motion of the resonator (i.e., motion of the resonator in response to Coriolis forces) with several sensing electrodes, one of which is adjacent to the single drive electrode. The proximity of the single drive electrode to the adjacent sensing electrode (sense-Coriolis electrode) results in some of the drive signal on the drive electrode coupling to the adjacent sense electrode, in a process known in the art as "feedthrough." However, the other Coriolis sense electrodes will not receive any such feedthrough (or at least will receive less feedthrough than the Coriolis sense electrode adjacent to the single drive electrode), resulting in a distortion of the signals from the Coriolis sense electrodes.

In contrast to such prior art gyroscopes, the present embodiment drives the resonator 106 with two drive electrodes on the X-axis (118-1 and 118-2), and two drive electrodes on the Y-axis (119-1 and 119-2) as explained above. Each of the drive electrodes is adjacent to a Coriolis sense electrode. In the embodiment of Fig. 5, drive electrodes 118-1,118-2,119-1 and 119-2 are adjacent to Coriolis sense electrodes 138-1,138-2,139-1 and 139-2, respectively. Indeed, a pair of drive electrodes on an axis (e.g., 118-1 and 118-2), may be said to define a center point between them, and their associated sense-Coriolis electrodes on the same axis (e.g., 138-1,138-2) may be said to be between the drive electrodes, and may be equally centered about the center point.

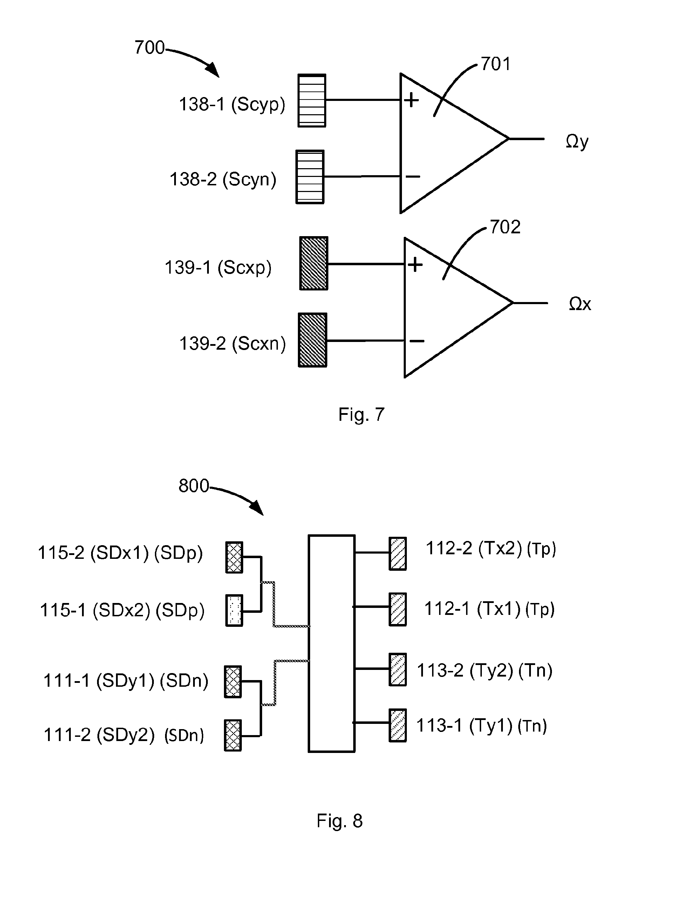

As such, each of the Coriolis sense electrodes (138-1, 138-2,129-1 and 139-2) receives similar feedthrough from its adjacent drive electrode (118-1,118-2, 119-2 and 119-2), thereby introducing equal common signals modes for the differential sense Coriolis configurations (out-of-plane modes, either degenerate or non-degenerate) along both the X-axis and the Y-axis. In other words, a drive signal on drive electrode 138-1 would feedthrough to Coriolis sense electrode 138-2; a drive signal on drive electrode 138-2 would feedthrough to Coriolis sense electrode 138-1; a drive signal on drive electrode 119-1 would feedthrough to Coriolis sense electrode 139-1; and a drive signal on drive electrode 139-1 would feedthrough to Coriolis sense electrode 139-2. Such common signals can be rejected in a circuit 700 configured to process the Coriolis sense signals on the Coriolis sense electrodes. Fig. 7 schematically illustrates a circuit 700 for processing the output of the Coriolis sense electrodes 138-1 and 138-2, and Coriolis sense electrodes 139-1 and 139-2. The signals from the sense electrodes (138-1 and 138-2, and 139-1 and 139-2, respectively) are provided to the input of differential amplifiers 701 and 702, respectively, which may be transimpedance amplifiers. The differential amplifiers 701, 702 reject the common signals caused by feedthrough, thereby the feedthrough signals are minimized.

### Alignment

Another benefit arising from the present embodiment relates to aligning the drive mode. As explained above, ideally the mode of the resonator aligns with the X-axis and Y-axis when driven by drive signals 350 and 360. However, that may not always be the case. For example, manufacturing processes may result in variations in the dimensions of elements of the gyroscope 100, and/ or variations in the gaps between features of the gyroscope 100, and such variations can affect the alignment of the mode of the resonator 106.

Therefore, some embodiments include feedback systems to tune the alignment of the drive mode. Gyroscope 100 includes drive sense electrodes 115-1 and 115-2 adjacent to the X-axis, and drive sense electrodes 111-1 and 111-2 adjacent to the Y-axis. Because these drive sense electrodes (115-1; 115-2; 111-1; 111-2) lie off of the X and Y axes, respectively, their sensitivity to the drive mode may be somewhat degraded (e.g., as compared to sense electrodes on an axis on which the resonator 106 is driven) but any such degradation is compensated by the fact that there are two such sense electrodes along each such axis.

If the mode lies on an axis other than that aligned with the drive electrodes (118-1, 118-2 and 119-1,119-2), a common mode current will appear on the sense electrodes 111-1 and 111-2, and 115-1 and 115-2. In the extreme, the electrostatic drive applied by the drive electrodes (118-1,118-2,119-1 and 119-2) will excite motion of the resonator 106 along exes at +/- 45 degrees to the X-axis and Y-axis, in which case equal signals (e.g., identical currents) will flow into drive sense electrodes 111-1, 111-2,115-1 and 115-2, thereby producing only common-mode current and no differential current in those electrodes.

The presence of common mode current on drive sense electrodes can be used to electrostatically tune the resonator mode using feedback electrodes 112-1 (also known as Tx1), 112-2 (also known as Tx2), 113-1 (also known as Ty1) and 113-2 (also known as Ty2). The signals sensed by the drive sense electrodes 115-1 and 115-2 and 111-1 and 111-2 are input to a feedback circuit 800 (Fig. 8) configured to electrostatically tune the mode of resonator 106 such that the mode to aligns with the X-axis and the Y-axis by applying electrostatic forces to the resonator 106 via electrodes 112-1 (also known as "Tx1" or "Tp"), 112-2 (also known as "Tx2" or "Tp"), 113-1 (also known as "Ty1" or "Tn") and 113-2 (also known as "Ty2" or "Tn"). In view of the disclosure herein, persons of ordinary skill in the art would know how to prepare such a circuit 800 without undue experimentation.

### Quadrature

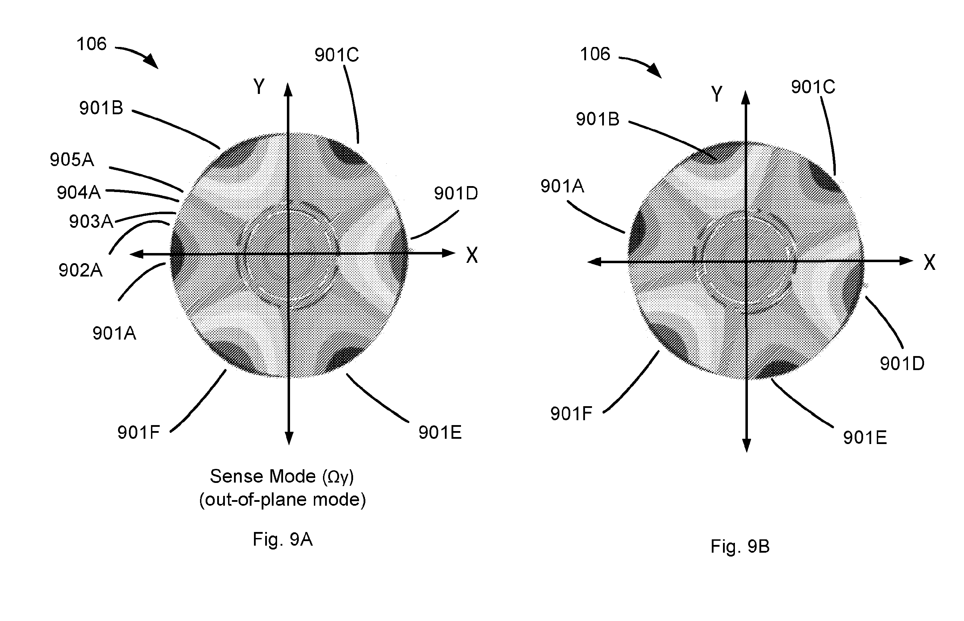

Fig. 9A schematically illustrates the response of a differentially-driven resonator 106, driven along the X-axis. Due to Coriolis acceleration in response to the rotation about the Y-axis, the surface 106B of the resonator 106 extends into gap 106A in the Z-axis (i.e., in Figs. 9A-9D, the Z-axis is normal to the plane of the page). As such, the response may be described as an "out-of-plane" response or motion. As shown in Fig. 9A, the resonator 106 produces several anti-nodes 901A - 901F where the Z-axis displacement is greatest, relative to the displacement at other points on the surface 106B. Further, two of the anti-nodes, 901A and 901D, are nominally aligned with the X-axis. At other points on the surface 106B, the displacement in the Z direction is less, as illustrated by the various shaded regions illustrated in Fig. 9A. Indeed, some portions of the surface 106B may be considered as nodes (e.g., 905A), in which there is no displacement of the surface 106B due to the rotation around the Y-axis. In this embodiment, each anti-node (e.g., 901A) is displaced from each of its neighboring anti-nodes (e.g., 901B and 901F) by 60 degrees within the resonator plane 108, and each node (e.g., 905A) is displaced from its neighboring anti-nodes (e.g., 901A and 901B) by approximately 30 degrees within the resonator plane 108.

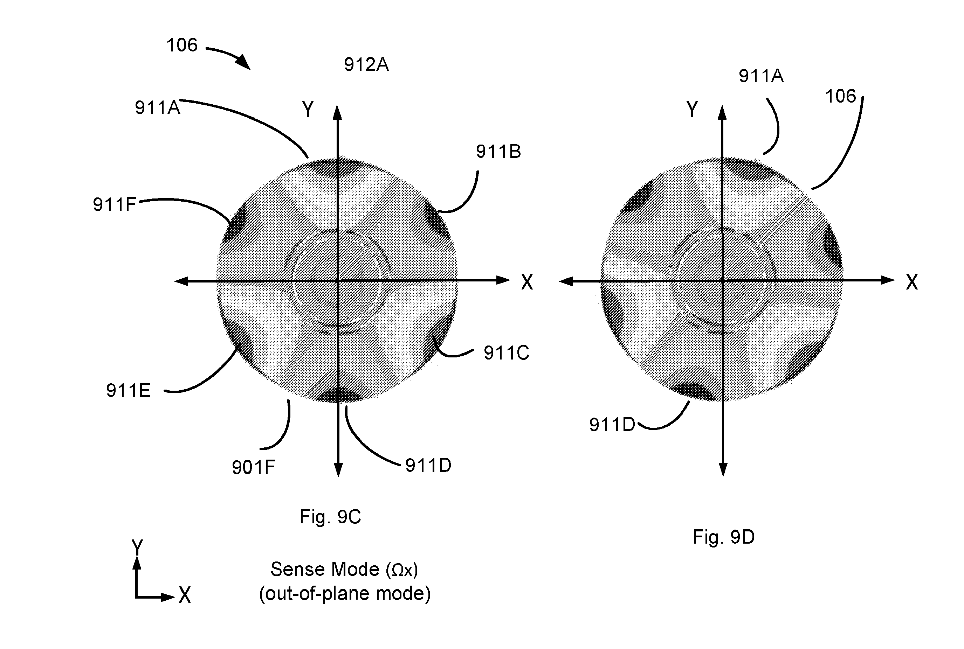

Fig. 9C schematically illustrates the response of a differentially-driven resonator 106, driven along the Y-axis, to a rotation about the X-axis, and is similar to Fig. 9A. Due to Coriolis acceleration in response to the rotation, the surface 106B of the resonator 106 extends in the Z direction. As shown in Fig. 9C, this body produces several anti-nodes 911A - 911F where the Z-axis displacement is greatest, relative to the displacement at other points on the surface 106B. Further, two of the anti-nodes, 911A and 911D, are nominally aligned with the Y-axis. At other points on the surface 106B, the displacement in the Z direction is less, as illustrated by the various shaded regions illustrated in Fig. 9C. Indeed, some portions of the surface 106B may be considered as nodes (e.g., 915A), in which there is little or no displacement of the surface 106B due to the rotation around the X-axis. In this embodiment, each anti-node (e.g., 911A) is displaced from each of its neighboring anti-nodes (e.g., 911B and 911F) by 60 degrees within the resonator plane 108, and each node (e.g., 915A) is displaced from its neighboring anti-nodes (e.g., 911A and 911B) by approximately 30 degrees within the resonator plane 108.

As schematically illustrated in Figs. 9A and 9C, the response (i.e., mode) of the resonator 106 to rotations about the Y-axis is nominally aligned with the X-axis, and the response (i.e., mode) of the resonator 106 to rotations about the Y-axis is nominally aligned with the X-axis. As such, because the X-axis is orthogonal to the Y-axis in the resonator plane 108, the two response modes (X-response mode and Y-response mode) are orthogonal to one another. However, in some circumstances, the response mode may fail to align with one or both of the X and Y axes. This could be due, to variations or stresses in the structure of the gyroscope due do fabrication or packaging processes, for example.

For example, when the nodes 901A and 901D align with the X-axis, the Y-response mode of the resonator 106 (i.e., due to rotation about the Y-axis) may said to be aligned with the X-axis. However, in some circumstances, the anti-nodes 901A and 901D may not align with the X-axis, as schematically illustrated in Fig. 9B, for example. In such cases, the Y-response mode of the resonator 106 is said to be misaligned (i.e., with the X-axis).

Similarly, when the anti-nodes 911A and 911D (Fig. 9C) align with the Y-axis, the X-response mode of the resonator 106 (i.e., due to rotation about the X-axis may) said to be aligned with the Y-axis. However, in some circumstances, the anti-nodes 911A and 911D may not align with the Y-axis, as schematically illustrated in Fig. 9D, for example. In such cases, the X-response mode of the resonator 106 is said to be misaligned (i.e., with the Y-axis).

When a response mode is misaligned, the mode is said to be out of "quadrature." When a mode is out of quadrature, the misalignment may manifest itself in errors in the ability of the gyroscope to detect and measure the rotation about the X-axis and/or the Y-axis, and the ability to discriminate between such rotations. An error of this type may be referred to as a "quadrature error." Structures and methods of addressing quadrature error by aligning the drive mode are described further below.

Some embodiments include quadrature sense electrodes configured to sense quadrature errors in the drive of the resonator 106, and to tune the drive mode using feedback circuits. When the resonator 106 is driven in its in-plane modes (i.e., along the X and Y axes), the Poisson term of the in-plane modes (that is, the out-of-plane common-mode signals) can be detected using Coriolis sense electrodes 138-1 (also known as "SCyp") and 138-2 (also known as "SCyn") along the X-axis; and 139-1 (also known as "SCxp") and 139-2 (also known as "SCxn") along the Y-axis.

Electrode 138-1 produces a first quadrature signal, and electrode 138-2 produces a second quadrature signal. If the resonator 106 is oscillating without quadrature errors, the common-mode of the first and second quadrature signals will have identical amplitudes and phase (i.e., zero degree phase difference). However, if the drive mode has been excited with a degree of misalignment relative to the drive electrodes 118-1 and 118-2, the first and second quadrature signals will have different (i.e., non-identical) amplitudes, and different (i.e., non-identical) phases.

As such, the differences between the first and second quadrature signals may be processed in a feedback loop to align the mode with the drive axes.

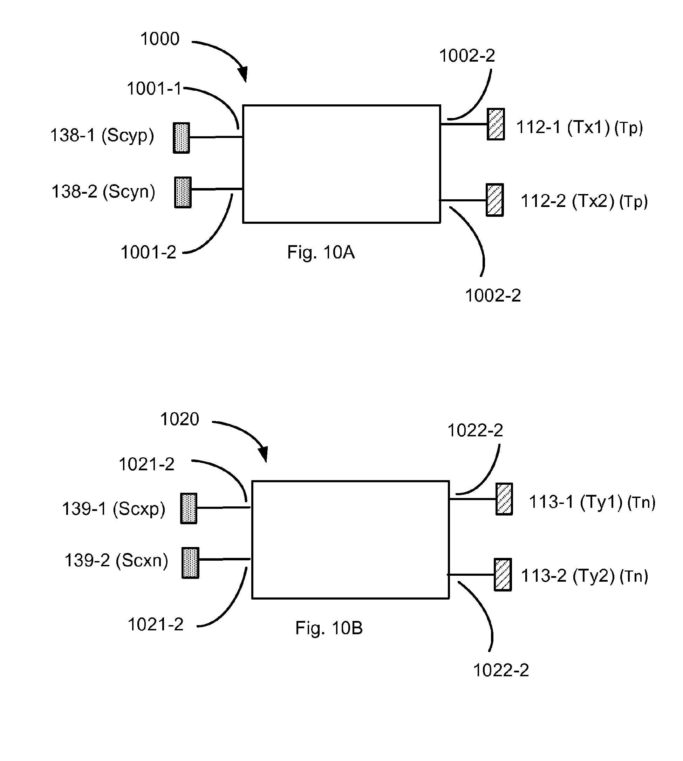

An illustrative feedback circuit 1000 for tuning a resonator along the X-axis is schematically illustrated in Fig. 10A. The circuit 1000 has two inputs (1001-1 and 1001-2) that receive differential input from Coriolis sense electrodes 138-1 and 138-2, respectively. The circuit 1000 has two outputs (1002-1 and 1002-2), that provide a differential tuning output to X-axis tuning electrodes 112-1 and 112-2, respectively. The feedback circuit 1000 is configured to assess the amplitudes and phase relationship of the first and second quadrature signals to determine quadrature errors on the XY-axis gyroscope. Feedback circuit 1000 adjusts the differential tuning output at electrodes 112-1 and 112-2, which apply electrostatic forces to the resonator 106, until the first and second quadrature signals have identical amplitudes and phase. In view of the disclosure herein, persons of ordinary skill in the art would know how to prepare such a circuit 1000 without undue experimentation.

Similarly, an illustrative feedback circuit 1020 for tuning the response mode along the Y-axis is schematically illustrated in Fig. 10B. The circuit 1020 has two inputs (1021-1 and 1021-2) that receive differential input from Coriolis sense electrodes 139-1 and 139-2, respectively. The circuit 1020 has two outputs (1022-1 and 1022-2), that provide a differential tuning output to Y-axis tuning electrodes 113-1 and 113-2, respectively. Feedback circuit 1020 adjusts the differential tuning output at electrodes 113-1 and 113-2, which apply electrostatic forces to the resonator 106, until the quadrature signals from 139-1 and 139-2 have identical amplitudes and phase.

### Sense Mode Excitation

In some gyroscopes, it may be desirable to assess the alignment of the sense modes to the sense electrodes 138-1 and 138-2 in the X-axis, and 139-1 and 139-2 in the Y-axis, in the absence of an applied rotation (or rotation rate). For example, such assessment may be useful for tuning, calibrating, or self-testing the gyroscope.

To that end, some embodiments include circuits and structures to excite the sense modes (i.e., the out-of-plane modes) without application of a rotation, based on the observation that the differential driving of the resonator 106 causes Poisson distortion, although that distortion is aligned with the drive electrodes (e.g., 118-1 and 118-2 when driven in the X-axis, and 119-1 and 119-2 when driven along the Y-axis), and so is unlike the distortions caused by Coriolis forces, which arise at 90 degree angles to the drive electrodes. In other words, the Poisson term of the in-plane drive mode can be used as the harmonic excitation, and sensed by the Coriolis sense electrodes (138-1 and 138-2 in the X-axis, and 139-1 and 139-2 in the Y-axis) if differential DC voltages are applied to the electrodes.

For example, when exciting the sense mode, DC voltages may be applied to electrodes 134-1 (also referred to as Tscyp), 134-2 (also referred to as Tscyn), 135-1 (also referred to as Tscxp) and 135-2 (also referred to as Tscxn). In some embodiments, a positive DC voltage is applied to electrodes 134-1, and a negative DC voltage is applied to electrodes 134-2, and a positive DC voltage is applied to electrodes 135-1, and a negative DC voltage is applied to electrodes 135-2.

Out-of-plane deflections, which result from Poison's effect on the driven elliptic mode, modulate electrostatic forces between the tuning electrode(s) and resonator 106. Because each such electrostatic force is an indirect and yet phase accurate function of the driven mode deflection, the end result is a voltage controlled spring effect coupling the drive and sense modes. This results in exciting the sense modes while the gyro 100 is driven without application of any rotation rate. If it is observed that sense modes are misaligned, a feedback circuit adjusts the (tuning) voltages to the associated tuning electrodes 112-1 (also known as Tx1 or Tp), 112-2 (also known as Tx2 or Tp), 113-1 (also known as Ty1 or Tn) and 113-2 (also known as Ty2 or Tn) until the modes come into alignment.

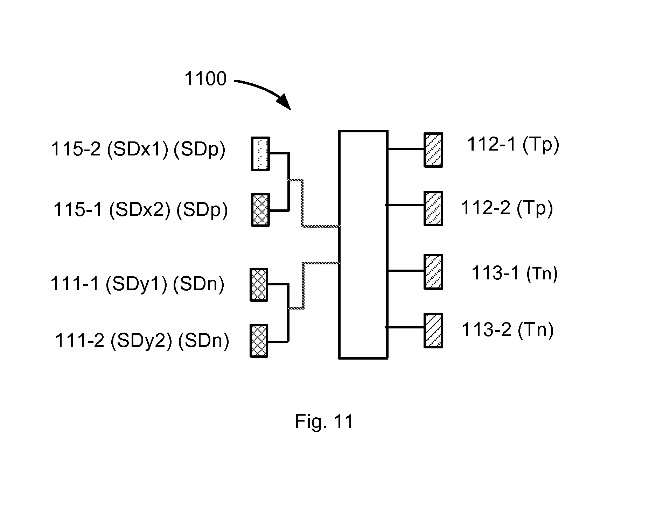

A circuit 1100 for exciting the sense mode of gyroscope 100 in the absence of an applied rotation is schematically illustrated in Fig. 11. In view of the disclosure herein, persons of ordinary skill in the art would know how to prepare such a circuit 1000 without undue experimentation.

Various embodiments of the invention may be implemented at least in part in any conventional computer programming language. For example, some embodiments may be implemented in a procedural programming language (e.g., "C"), or in an object oriented programming language (e.g., "C++"). Other embodiments of the invention may be implemented as preprogrammed hardware elements (e.g., application specific integrated circuits, FPGAs, and digital signal processors), or other related components.

In an alternative embodiment, the disclosed apparatus and methods may be implemented as a computer program product for use with a computer system. Such implementation may include a series of computer instructions fixed either on a tangible medium, such as a non-transient computer readable medium (e.g., a diskette, CD-ROM, ROM, or fixed disk). The series of computer instructions can embody all or part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation (e.g., shrink wrapped software), preloaded with a computer system (e.g., on system ROM or fixed disk), or distributed from a server or electronic bulletin board over the network (e.g., the Internet or World Wide Web). Of course, some embodiments of the invention may be implemented as a combination of both software (e.g., a computer program product) and hardware. Still other embodiments of the invention are implemented as entirely hardware, or entirely software.

The embodiments of the invention described above are intended to be merely exemplary; numerous variations and modifications will be apparent to those skilled in the art. All such variations and modifications are intended to be within the scope of the present invention as defined in any appended claims.

## Claims

1. A shell-type gyroscope comprising:
a resonator disposed in a resonator plane, the resonator plane defining an X-axis, and defining a Y-axis orthogonal to the X-axis in the resonator plane;
a plurality of X-drive electrodes disposed on the X-axis and in the resonator plane;
a plurality of Y-drive electrodes disposed on the Y-axis and in the resonator plane, the plurality of X-drive electrodes and Y-drive electrodes configured to differentially drive the resonator in the resonator plane,
a plurality of sense-drive electrodes comprising:
a plurality of X sense-drive electrodes disposed in the resonator plane and adjacent to a first one of the plurality of X-drive electrodes, and
a plurality of Y sense-drive electrodes disposed in the resonator plane and adjacent to a first one of the plurality of Y-drive electrodes;
the plurality of sense-drive electrodes configured to differentially detect in-plane motion of the resonator; and
a plurality of sense-Coriolis electrodes comprising:
a first plurality of differential sense-Coriolis electrodes disposed parallel to the resonator plane and along the X-axis and disposed so as to receive common feedthrough signals from a corresponding one of the X-drive electrodes; and
a second plurality of differential sense-Coriolis electrodes disposed parallel to the resonator plane and along the Y-axis, and disposed so as to receive common feedthrough from a corresponding one the Y-drive electrodes.

2. The shell-type gyroscope of claim 1, wherein:
the plurality of X-sense drive electrodes are configured to detect displacement of the resonator within the resonator plane; and
the plurality of Y-sense drive electrodes are configured to detect displacement of the resonator within the resonator plane.

3. The shell-type gyroscope of claim 2, wherein the plurality of X-sense drive electrodes comprises:
a first X-sense drive electrode disposed adjacent to a first one of the X-drive electrodes; and
a second X-sense drive electrode disposed adjacent to the first one of the X-drive electrodes, such that the first one of the X-drive electrodes is between the first X-sense drive electrode and the second X-sense drive electrode.

4. The shell-type gyroscope of claim 3, further comprising a plurality of drive-tuning electrodes disposed in the resonator plane, the plurality of drive-tuning electrodes configured to controllably exert electrostatic force on the resonator so as to align the drive axis with the anti-nodes of the resonator, and optionally wherein the plurality of drive-tuning electrodes comprises:
a first X-axis drive-tuning electrode disposed adjacent to a second one of the X-drive electrodes; and
a second X-axis drive-tuning electrode disposed adjacent to the second one of the X-drive electrodes, such that the first one of the X-drive electrodes is between the first X-axis drive-tuning electrode and the second X-axis drive-tuning electrode.

5. The shell-type gyroscope of claim 1, in which at least one of the following applies:
a) wherein the X-drive electrodes and the Y-drive electrodes are configured to be fully differential and symmetric about both X-axis and the Y-axis simultaneously;
b) the shell-type gyroscope of claim 1, further comprising a substrate comprising a substrate plane, the resonator suspended above or below the substrate such that the resonator plane is parallel to the substrate plane, and the plurality of sense-Coriolis electrodes are disposed on the substrate.

6. The shell type gyroscope of claim 1, further comprising a plurality of sense-tuning electrodes disposed parallel to the resonator plane, the plurality of sense-tuning electrodes configured to controllably exert electrostatic force on the resonator so as to align the resonator with the sense-Coriolis electrodes.

7. The shell-type gyroscope of claim 6, wherein the plurality of sense-tuning electrodes comprises:
a pair of X-axis sense-tuning electrodes; and
a pair of Y-axis sense-tuning electrodes.

8. The shell-type gyroscope of claim 7, further comprising a sense-tuning-feedback circuit comprising:
sense-tuning feedback inputs electrically coupled to the plurality of sense-Coriolis electrodes; and
sense-tuning feedback outputs electrically coupled to the sense-tuning electrodes, the feedback circuit configured to exert an electrostatic force on the resonator.

9. The shell-type gyroscope of claim 1, wherein the plurality of X-sense-Coriolis electrodes comprise a first X-sense-Coriolis electrode, and a second X-sense-Coriolis electrode; and the plurality of Y-sense-Coriolis electrodes comprise a first Y-sense-Coriolis electrode and a second Y-sense-Coriolis electrode; the gyroscope further comprising:
a first differential amplifier having a first differential input and a second differential input and a first output, the first differential input electrically coupled to the first X-sense-Coriolis electrode and the second differential input electrically coupled to the second X-sense-Coriolis electrode, such that the first differential amplifier rejects the common feedthrough signal; and
a second differential amplifier having a third differential input and a fourth differential input and a second, the third differential input electrically coupled to the first Y-sense-Coriolis electrode and the fourth differential input electrically coupled to the second Y-sense-Coriolis electrode, such that the second differential amplifier rejects the common feedthrough signal.

10. A method of detecting quadrature errors in an XY-gyroscope comprising:
providing a shell-type gyroscope comprising:
a resonator having a resonator surface disposed in a resonator plane, the resonator plane defining an X-axis, and defining a Y-axis orthogonal to the X-axis in the resonator plane, and defining a Z-axis orthogonal to the resonator plane;
a plurality of X-drive electrodes disposed on the X-axis and in the resonator plane;
a plurality of Y-drive electrodes disposed on the Y-axis and in the resonator plane, the plurality of X-drive electrodes and Y-drive electrodes configured to differentially drive the resonator in the resonator plane;
a plurality of sense-drive electrodes comprising:
a plurality of X sense-drive electrodes disposed in the resonator plane and adjacent to a first one of the plurality of X-drive electrodes, and
a plurality of Y sense-drive electrodes disposed in the resonator plane and adjacent to a first one of the plurality of Y-drive electrodes;
the plurality of sense-drive electrodes configured to detect in-plane displacement of the resonator; and
a plurality of sense-Coriolis electrodes comprising:
a first plurality of differential sense-Coriolis electrodes disposed parallel to the resonator plane and along the X-axis and disposed so as to receive an X-common feedthrough from a corresponding one of the X-drive electrodes, and configured to sense rotations about the Y-axis; and
a second plurality of differential sense-Coriolis electrodes disposed parallel to the resonator plane and along the Y-axis, and disposed so as to receive a common feedthrough from a corresponding one the Y-drive electrodes, and configured to sense rotations about the X-axis;
driving the resonator in an in-plane mode with drive signals from the X-drive electrodes and the Y-drive electrodes, the in-plane mode having distortion along the Z-axis due to a Poisson effect, causing the surface of the resonator to displace in the Z-axis;
sensing a first Z-axis displacement of the resonator due to the Poisson effect of the in-plane drive modes using the sense-Coriolis electrodes on a substrate disposed adjacent to the resonator in parallel with X-axis; and
sensing a second Z-axis displacement of the resonator due to the Poisson effect of the in-plane drive modes using the sense-Coriolis electrodes on the substrate in parallel with the Y-axis;
assessing the amplitudes and phase relationship of the first Z-axis displacement and the second Z-axis displacement to determine quadrature errors on the XY-axis gyroscope.

11. The method of detecting quadrature errors in an XY-gyroscope according to claim 10, further comprising applying tuning voltages to the X-axis drive-tuning electrodes and the Y-axis drive-tuning electrodes to drive an amplitude difference and a phase difference between the first Z-axis displacement and the second Z-axis displacement to zero.

12. A method of exciting sense Coriolis out-of-plane modes in an XY-axis gyroscope, without the application of any rotation rate into the gyroscope, the method comprising:
providing a shell-type gyroscope comprising:
a resonator having a resonator surface disposed in a resonator plane, the resonator plane defining an X-axis, and defining a Y-axis orthogonal to the X-axis in the resonator plane;
a plurality of X-drive electrodes disposed on the X-axis and in the resonator plane;
a plurality of Y-drive electrodes disposed on the Y-axis and in the resonator plane, the plurality of X-drive electrodes and Y-drive electrodes configured to differentially drive the resonator in the resonator plane;
a plurality of sense-drive electrodes comprising:
a plurality of X sense-drive electrodes disposed in the resonator plane and adjacent to a first one of the plurality of X-drive electrodes, and
a plurality of Y sense-drive electrodes disposed in the resonator plane and adjacent to a first one of the plurality of Y-drive electrodes;
the plurality of sense-drive electrodes configured to differentially detect in-plane displacement of the resonator; and
a plurality of sense-Coriolis electrodes comprising:
a first plurality of differential sense-Coriolis electrodes disposed parallel to the resonator plane and along the X-axis and disposed so as to receive common feedthrough from a corresponding one of the X-drive electrodes, and configured to sense rotations about the Y-axis; and
a second plurality of differential sense-Coriolis electrodes disposed parallel to the resonator plane and along the Y-axis, and disposed so as to receive common feedthrough from a corresponding one the Y-drive electrodes, and configured to sense rotations about the X-axis;
providing a resonator DC voltage to the resonator;
driving the resonator in an in-plane mode with drive signals from the X-drive electrodes and the Y-drive electrodes, the in-plane mode having a slight Poisson distortion causing the surface of the resonator to displace in the Z-axis, such that the Poisson distortion in the Z-axis can be used as harmonic excitation and can be sensed by the sense-Coriolis electrodes; and
applying DC voltages to the sense-Coriolis electrodes, the DC voltages being different than the resonator DC voltage and differential on the differential sense-Coriolis electrodes, such that the out-of-plane modes can be excited without application of any rotation.

13. The method of tuning a shell-type gyroscope according to claim 14, wherein driving the resonator in an in-plane mode with drive signals from the X-drive electrodes and the Y-drive electrodes comprises:
driving the X-drive electrodes with a first periodic drive signal having a period; and
driving the Y-drive electrodes with a second periodic drive signal having a period and have a phase of 180 degrees relative to the first periodic signal.

14. The method of tuning a shell-type gyroscope according to claim 12, further comprising:
assessing the frequency of the excited out-of-plane mode relative to the frequency of the drive mode; and
assessing the alignment of the excited out-of-plane mode relative to the sense-Coriolis electrodes.

15. A shell-type gyroscope comprising:
a resonator disposed in a resonator plane, the resonator plane defining an X-axis, and defining a Y-axis orthogonal to the X-axis in the resonator plane, and defining a Z-axis mutually orthogonal to the X-axis and the Y-axis;
means for differentially driving the resonator in the X-axis;
means for differentially driving the resonator in the Y-axis; and
means for sensing rotations about two orthogonal axes-of-rotation in the resonator plane using two out-of-plane flexural or bulk modes of the resonator caused by rotation about the axes

16. The shell-type gyroscope according to claim 15, in which at least one of the following applies:
a) the gyroscope further comprises means for controllably exerting electrostatic force on the resonator so as to align the drive axis with anti-nodes of the resonator;
b) the gyroscope further comprises means for controllably exerting electrostatic force on the resonator so as to align the resonator with the means for sensing rotations about two orthogonal axes-of-rotation;
c) the shell-type gyroscope further comprises means for detecting quadrature errors;
d) the shell-type gyroscope further comprises means for exciting out-of-plane modes which are sense-Coriolis modes in the gyroscope, without the application of any rotation rate into the gyroscope.
